(19) Europäisches Patentamt
European Patent Office
Office européen des brevets

(11) **EP 3 128 179 A1**

(12) **EUROPÄISCHE PATENTANMELDUNG**

(43) Veröffentlichungstag:
08.02.2017 Patentblatt 2017/06

(21) Anmeldenummer: **16180151.9**

(22) Anmeldetag: **19.07.2016**

(51) Int Cl.:
*F04D 25/04* (2006.01)    *F01D 5/04* (2006.01)
*F02C 6/12* (2006.01)    *F04D 29/28* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **04.08.2015   DE 102015214864**

(71) Anmelder: **Bosch Mahle Turbo Systems GmbH & Co. KG**
**70376 Stuttgart (DE)**

(72) Erfinder: **PHAM, Kinh Toai**
**71636 Ludwigsburg (DE)**

(74) Vertreter: **BRP Renaud & Partner mbB**
**Rechtsanwälte Patentanwälte**
**Steuerberater**
**Königstraße 28**
**70173 Stuttgart (DE)**

(54) **VERDICHTERRAD MIT WELLIGEN RADRÜCKEN**

(57)    Die Erfindung betrifft ein Verdichterrad (1) einer Ladeeinrichtung (2) mit einer Nabe (4) und Schaufeln (5) sowie mit einem Radrücken (6). Erfindungswesentlich ist dabei, dass der Radrücken (6) einen von der Nabe (4) in Radialrichtung (7) ausgehenden wellenförmigen Verlauf (13) aufweist mit sich von der Nabe (4) in Radialrichtung (7) ausgehenden und aneinander anschließenden Bereichen (8, 9, 10, 11), nämlich
- einem ersten konkaven Bereich (8),

- einem sich an den ersten konkaven Bereich (8) anschließenden zweiten konvexen Bereich (9),
- einem sich an den zweiten konvexen Bereich (9) anschließenden dritten konkaven Bereich (10),
- einem sich an den dritten konkaven Bereich (10) anschließenden vierten konvexen Bereich (11).
    Hierdurch kann die Rissneigung erheblich reduziert werden.

Fig. 1

EP 3 128 179 A1

**Beschreibung**

Die vorliegende Erfindung betrifft ein Verdichterrad einer Ladeeinrichtung mit einer Nabe und davon ausgehenden Schaufeln sowie mit einem Radrücken gemäß dem Oberbegriff des Anspruchs 1. Die Erfindung betrifft außerdem einen Abgasturbolader mit einem solchen Verdichterrad.

Aus der EP 1 809 907 B1 ist ein gattungsgemäßes Verdichterrad mit einer Rotationsachse und einer Vielzahl von Schaufeln bekannt, die sich im allgemeinen radial weg von der Achse und im allgemeinen axial von einer Fläche einer scheibenartigen Halterung erstrecken, wobei die entgegengesetzte Fläche der Halterung einen Radrücken definiert. Mindestens ein Abschnitt des Radrückens ist dabei mit einer Restdruckspannungsschicht versehen, die sich bis zu einer Tiefe unterhalb der Oberfläche des Radrückens erstreckt. Hierdurch soll insbesondere eine Rissbildung reduziert werden.

Aus der US 6,164,931 A ist ebenfalls ein gattungsgemäßes Verdichterrad bekannt, dessen Radrücken jedoch gekrümmt, das heißt insbesondere konkav, ausgebildet ist.

Aus der US 2005/0169764 A1 ist ein Verdichterrad bekannt, dessen Radrücken konkav ausgebildet ist und wobei in einem Axialabschnitt des Radrückens zusätzlich eine Dichtung angeordnet ist.

Generell sind Verdichterräder aufgrund ihrer hohen Drehzahlen hoch beanspruchte Bauteile, die aufgrund der auf sie einwirkenden Kräfte vermehrt zu einer Rissbildung neigen. Um eine derartige Rissneigung zumindest reduzieren zu können, sind Verfahren bekannt, wie beispielsweise aus der EP 1 809 907 B1, bei welchem das Verdichterrad kugelgestrahlt wird. Auch aus der US 2003/0136001 A1 ist schließlich noch ein Verdichterrad bekannt, welches aufgrund eines speziellen Herstellungsverfahrens eine größere Festigkeit und dadurch eine geringere Rissneigung aufweist.

Nachteilig bei den aus dem Stand der Technik bekannten Verdichterrädern, welche bezüglich ihrer Rissneigung optimiert wurden, ist jedoch der hierfür erforderliche, vergleichsweise hohe technische und monetäre Aufwand.

Die vorliegende Erfindung beschäftigt sich daher mit dem Problem, für ein Verdichterrad der gattungsgemäßen Art eine verbesserte oder zumindest eine alternative Ausführungsform anzugeben, die sich insbesondere durch eine reduzierte Rissneigung und zugleich eine kostengünstige Herstellung auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Radrücken eines Verdichterrades einer Ladeeinrichtung wellenförmig auszubilden und dadurch im Bereich einer hohen Spannungsbelastung zusätzliche konvexe Abschnitte vorzusehen, die das Verdichterrad in diesen Bereichen verstärken und dadurch verschleißresistenter machen und zudem eine Rissneigung reduzieren. Das erfindungsgemäße Verdichterrad weist dabei in bekannter Weise eine Nabe sowie Schaufeln und den zuvor genannten Radrücken auf. Der Radrücken selbst weist erfindungsgemäß einen von der Nabe in Radialrichtung ausgehenden, wellenförmigen Verlauf auf, mit sich von der Nabe in Radialrichtung ausgehenden und aneinander anschließenden Bereichen, nämlich einem ersten konkaven Bereich, einem sich daran in Radialrichtung nach außen anschließenden zweiten konvexen Bereich, einem sich an den zweiten konvexen Bereich anschließenden dritten konkaven Bereich sowie einem sich an den dritten konkaven Bereich anschließenden vierten konvexen Bereich. Bei dem erfindungsgemäßen Verdichterrad sind somit der zweite und der vierte Bereich konvex ausgebildet und weisen dadurch eine Materialanhäufung in Form einer Wölbung auf, die das Verdichterrad in diesen Bereichen verstärkt und hierdurch die Rissneigung reduziert. Durch die lokale Verstärkung des Verdichterrades kann die Rissneigung erheblich reduziert werden, während sich ein Gewicht des erfindungsgemäßen Verdichterrades lediglich marginal erhöht.

Bei einer vorteilhaften Weiterbildung der erfindungsgemäßen Lösung weist eine Wölbung im vierten konvexen Bereich eine axiale Höhe h von ca. 0,15 mm auf. Bereits eine solch geringe Materialanhäufung im Bereich der Wölbung des vierten konvexen Bereiches ermöglicht dabei eine signifikante Spannungsreduzierung und dadurch eine Reduzierung der Rissneigung, was in ausführlichen Versuchen nachgewiesen wurde. Bezogen auf einen Durchmesser des Verdichterrades bietet es sich an, die Wölbung im vierten konvexen Bereich einem Radius R4 nachzubilden, der einem Viertel des Durchmessers D des Verdichterrades entspricht ($R4 \approx D/4 = R/2$).

Zweckmäßig reicht die Nabe von einer Rotationsachse des Verdichterrades bis zum ersten Bereich und besitzt darüber hinaus eine plane, ringförmige Stirnfläche. Über diese plane Stirnfläche kann sie beispielsweise an einem Axialanschlag einer Welle anliegen. Im Vergleich zu einem herkömmlichen Verdichterrad kann auch die plane Stirnfläche aufgedickt sein, so dass hier beispielsweise ein zusätzlicher Materialauftrag von ca. 0,8 bis 1,2 mm in Axialrichtung vorgehalten wird. Im Vergleich zu aus dem Stand der Technik bekannten Verdichterrädern ist jedoch eine zusätzliche Materialaufhäufung überwiegend in den nunmehr konvexen Bereichen vorgesehen, so dass die erfindungsgemäßen konkaven Bereiche nicht oder nur geringfügig aufgedickt sind. Die erfindungsgemäßen konkaven Bereiche könnten sogar weniger Material aufweisen, als bisher, so dass dadurch die Materialanhäufungen in den konvexen Bereichen zumindest teilweise kompensiert werden können. Die konvexen und konkaven Bereiche sind dabei auf die jeweils erwarteten Spannungen ausgelegt.

Bei einer vorteilhaften Weiterbildung der erfindungsgemäßen Lösung weist der erste Bereiche eine Radialerstreckung von ca. 7 % des Radius des Verdichterrades auf, der zweite Bereich eine Radialerstreckung von ca. 25 %, der dritte Bereich eine Radialerstreckung von ca. 30 % und schließlich der vierte Bereich eine Radialerstreckung von ca. 20 % des Radius des Verdichterrades. Die Stirnfläche besitzt eine Radialerstreckung von ca. 15 % des Radius des Verdichterrades, wobei die einzelnen %-Angaben selbstverständlich variieren können und lediglich relative Verhältnisse zwischen der Radialerstreckung einzelner Bereiche vermitteln sollen. Durch eine derart gewählte Radialerstreckung der einzelnen Bereiche, kann die Rissneigung des erfindungsgemäßen Verdichterrades signifikant reduziert werden.

Die vorliegende Erfindung beruht weiter auf dem allgemeinen Gedanken, einen Abgasturbolader mit einem solchen, zuvor beschriebenen Verdichterrad auszustatten, wodurch ein besonders langlebiger Abgasturbolader geschaffen werden kann, da die Rissneigung des Verdichterrades aufgrund der einzelnen konvexen Bereiche signifikant gesenkt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch

Fig. 1    eine Schnittdarstellung durch ein erfindungsgemäßes Verdichterrad,

Fig. 2    eine Detaildarstellung aus Fig. 1.

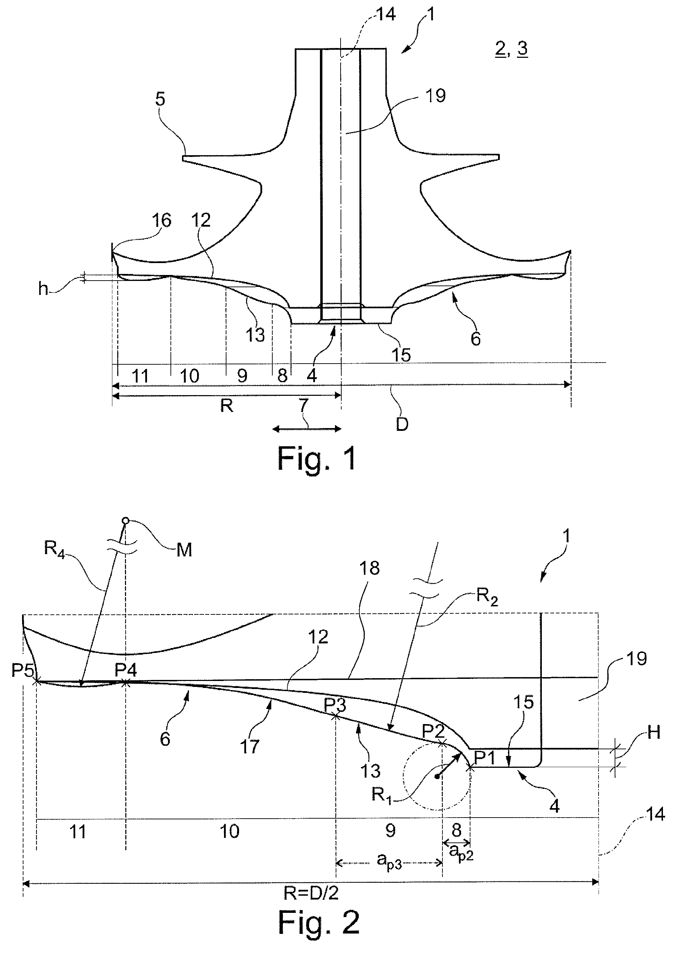

Entsprechend der Fig. 1 und teilweise der Fig. 2, weist ein erfindungsgemäßes Verdichterrad 1 einer im Übrigen nur angedeuteten Ladeeinrichtung 2, insbesondere eines Abgasturboladers 3, eine Nabe 4 sowie Schaufeln 5 und einen Radrücken 6 auf. Um nun eine Rissneigung des Verdichterrades 1 reduzieren und dadurch dessen Lebensdauer verlängern zu können, ist erfindungsgemäß vorgesehen, dass der Radrücken 6 einen von der Nabe 4 in Radialrichtung 7 ausgehenden, wellenförmigen Verlauf aufweist, mit sich von der Nabe 4 in Radialrichtung 7 ausgehenden und aneinander anschließenden Bereichen 8, 9, 10 und 11.

Wie man dabei auf der linken Hälfte der Fig. 1 klar erkennen kann, ist der erste Bereich 8 konkav ausgeführt, während der sich daran in Radialrichtung 7 anschließende zweite Bereich 9 konvex ausgebildet ist. Der sich wiederum an den zweiten konvexen Bereich 9 anschließende dritte Bereich 10 ist konkav ausgebildet, während der vierte Bereich 11 wiederum konvex ausgebildet ist. In der Fig. 1 ist dabei mit dem Bezugszeichen 12 der Originalverlauf des Radrückens bei herkömmlichen Verdichterrädern bezeichnet, während das Bezugszeichen 13 den erfindungsgemäßen, wellenförmigen Verlauf bezeichnet.

Der erste konkave Bereich 8 ist dabei mit einem Radius R1 ausgerundet, der zwischen 3,125% und 6% des Durchmessers D des Verdichterrades 1 liegt, während der zweite konvexe Bereich 9 mit einem Radius R2 ausgerundet ist, der in etwa dem Durchmesser D des Verdichterrades 1 entspricht. Der erste konkave Bereich 8 beginnt in Radialrichtung 7 bei P1 und endet bei P2. Ein Radialabstand der Punkte P1 und P2 beträgt dabei aP2 = 0,77 x R1.

Der dritte Bereich 10 geht dabei über eine im Punkt P2 anliegende Tangente 17 in den zweiten konvexen Bereich 9 über. Ein Radialabstand der Punkte P2 und P3 beträgt dabei aP3 = 0,225 x D. Gleichzeitig geht der dritte Bereich 10 über eine im Punkt P4 anliegende und nicht gezeigte Tangente in den vierten konvexen Bereich 11 über.

Eine Wölbung im vierten konvexen Bereich 11 besitzt dabei eine axiale Höhe von ca. 0,15 mm. Die axiale Höhe h bezieht sich dabei auf die Höhe in Axialrichtung des Verdichterrades 1. Bezogen auf einen Durchmesser des Verdichterrades 1 beträgt ein Wölbungsradius R4 im vierten konvexen Bereich 11 ein Viertel des Durchmessers D des Verdichterrades (R4 ≈ D/4 = R/2). Der durch den Radius R4 gebildete Kreis schneidet den Punkt P5 und legt gleichzeitig die Lage des Punktes P4 durch eine durch den Mittelpunkt M des Kreises und eine den wellenförmigen Verlauf 13 schneidende Vertikale fest.

Allen Ausführungsformen ist dabei gemein, dass es im Radrücken 6 keine sich in Richtung der Schaufeln 5 erstreckenden Vertiefungen gibt, die axial tiefer sind als der Punkt P5 am Außendurchmesser. Eine Außenkontur des Radrückens 6 kreuzt somit an keiner Stelle einen durch den Punkt P5 verlaufenden Radialstrahl 18, sondern tangiert diesen höchsten. Es sind somit keine die Festigkeit reduzierenden Vertiefungen vorhanden.

Betrachtet man die Fig. 1 weiter, so kann man erkennen, dass die Nabe 4 von einer Rotationsachse 14 bis zum ersten Bereich 8 reicht und eine plane, ringförmige Stirnfläche 15 aufweist. Diese plane Stirnfläche 15 besitzt dabei eine Radialerstreckung von ca. 15% des Radius R des Verdichterrades 1.

Der erste konkave Bereich 8 wiederum besitzt eine Radialerstreckung von ca. 7% des Radius R des Verdichterrades 1, während der zweite konvexe Bereich 9 eine Radialerstreckung von ca. 25% des Radius R des Verdichterrades 1 aufweist. Betrachtet man den dritten konkaven Bereich 10, so kann man erkennen, dass dieser eine Radialerstreckung von ca. 30% des Radius R des Verdichterrades 1 aufweist, während die Radialerstreckung des vierten konvexen Bereichs 11 ca. 20% des Radius R beträgt. Die Radialerstreckungen der Stirnfläche 15 sowie der einzelnen Bereiche 8 bis 11 ergeben zusammen ca. 97% des Radius R des Verdichterrades 1, da eine Schaufelspitze 16 in Radialrichtung noch leicht über Radrücken 6 übersteht.

Betrachtet man den Verlauf 12 eines Radrückens eines aus dem Stand der Technik bekannten Verdichterrades mit dem erfindungsgemäßen Verlauf 13 des Radrückens 6 des erfindungsgemäßen Verdichterrades 1, so kann man erkennen, dass eine Aufdickung des Radrückens 6 insbesondere in den beiden konvexen Bereichen 9 und 11 erfolgt, da in diesen die Spannungsbelastung und damit auch die Rissneigung am größten sind. Durch die lokale Aufdickung des Radrückens 6 in den beiden konvexen Bereichen 9, 11, kann somit eine Verstärkung des Radrückens 6 ausschließlich in den erforderlichen, spannungsbelasteten Bereichen erzielt und dadurch eine Minimierung der Rissneigung mit minimalem zusätzlichen Gewicht erreicht werden. Zusätzlich kann selbstverständlich auch die Nabe 4 noch im Bereich der Stirnfläche 15 um ca. 0,9 < H < 1,2 mm aufgedickt sein. Die Höhe H der Aufdickung bzw. der Stufe im Bereich der Nabe 4 entspricht dabei

$$H \approx 0{,}016 \times D.$$

Hierdurch können insbesondere die in diesem Bereich verstärkt auftretenden Spannungen besser aufgenommen werden. Besonders vorteilhaft ist dabei, dass eine Durchgangsöffnung 19 zur Aufnahme einer Welle sich ohne Erweiterungen bis zur Stirnfläche 15 erstreckt. Lediglich eine kleine Fase ist vorgesehen.

Mit dem erfindungsgemäßen wellenförmigen Verlauf 13 des Radrückens 6 kann die Lebenserwartung um 50 bis 100% im Vergleich zu bisherigen Verdichterrädern gesteigert werden.

**Patentansprüche**

1. Verdichterrad (1) einer Ladeeinrichtung (2) mit einer Nabe (4) und Schaufeln (5) sowie mit einem Radrücken (6),
**dadurch gekennzeichnet,**
**dass** der Radrücken (6) einen von der Nabe (4) in Radialrichtung (7) ausgehenden wellenförmigen Verlauf (13) aufweist mit sich von der Nabe (4) in Radialrichtung (7) ausgehenden und aneinander anschließenden Bereichen (8, 9, 10, 11), nämlich

- einem ersten konkaven Bereich (8),
- einem sich an den ersten konkaven Bereich (8) anschließenden zweiten konvexen Bereich (9),
- einem sich an den zweiten konvexen Bereich (9) anschließenden dritten konkaven Bereich (10),
- einem sich an den dritten konkaven Bereich (10) anschließenden vierten konvexen Bereich (11).

2. Verdichterrad nach Anspruch 1,
**dadurch gekennzeichnet, dass**
eine Wölbung im vierten konvexen Bereich (11) eine axiale Höhe h von ca. 0,15 mm aufweist.

3. Verdichterrad nach Anspruch 1 oder 2,
**dadurch gekennzeichnet, dass**
die Nabe (4) von einer Rotationsachse (14) bis zum ersten konkaven Bereich (8) reicht und eine plane Stirnfläche (15) aufweist.

4. Verdichterrad nach Anspruch 3,
**dadurch gekennzeichnet, dass**
die Stirnfläche (15) eine Radialerstreckung von ca. 15 % eines Radius (R) des Verdichterrades (1) aufweist.

5. Verdichterrad nach einem der vorhergehenden Ansprüche,
**dadurch gekennzeichnet, dass**
der erste konkave Bereich (8) eine Radialerstreckung von ca. 7 % des Radius (R) des Verdichterrades (1) aufweist.

6. Verdichterrad nach einem der vorhergehenden Ansprüche,
**dadurch gekennzeichnet, dass**
der zweite konvexe Bereich (9) eine Radialerstreckung von ca. 25 % des Radius (R) des Verdichterrades (1) aufweist.

6. Verdichterrad nach einem der vorhergehenden Ansprüche,
**dadurch gekennzeichnet, dass**
der dritte konkave Bereich (10) eine Radialerstreckung von ca. 30 % des Radius (R) des Verdichterrades (1) aufweist.

8. Verdichterrad nach einem der vorhergehenden Ansprüche,
**dadurch gekennzeichnet, dass**
der vierte konvexe Bereich (11) eine Radialerstreckung von ca. 20 % des Radius (R) des Verdichterrades (1) aufweist.

9. Abgasturbolader (3) mit einem Verdichterrad (1) nach einem der vorhergehenden Ansprüche.

Fig. 1

Fig. 2

**Europäisches Patentamt**
**European Patent Office**
**Office européen des brevets**

# EUROPÄISCHER RECHERCHENBERICHT

Nummer der Anmeldung

EP 16 18 0151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 137 866 A1 (PRATT & WHITNEY CANADA [CA]) 4. Oktober 2001 (2001-10-04) * Absatz [0001]; Abbildung 2 * ----- | 1-9 | INV. F04D25/04 F01D5/04 F02C6/12 F04D29/28 |
| X | EP 2 417 359 A1 (TURBOMECA [FR]) 15. Februar 2012 (2012-02-15) * Absatz [0001]; Abbildung 4 * ----- | 1-9 | |
| X | GB 2 469 489 A (ROLLS ROYCE PLC [GB]) 20. Oktober 2010 (2010-10-20) * Zusammenfassung; Abbildung 1b * ----- | 1-9 | |

RECHERCHIERTE SACHGEBIETE (IPC)

F04D
F01D
F02C

Der vorliegende Recherchenbericht wurde für alle Patentansprüche erstellt

| Recherchenort | Abschlußdatum der Recherche | Prüfer |
|---|---|---|
| München | 23. November 2016 | de Martino, Marcello |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 18 0151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2016

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1137866 | A1 | 04-10-2001 | CA | 2352852 | A1 | 15-06-2000 |
| | | | DE | 69918162 | D1 | 22-07-2004 |
| | | | DE | 69918162 | T2 | 14-10-2004 |
| | | | EP | 1137866 | A1 | 04-10-2001 |
| | | | JP | 2002531760 | A | 24-09-2002 |
| | | | US | 6224321 | B1 | 01-05-2001 |
| | | | WO | 0034628 | A1 | 15-06-2000 |
| EP 2417359 | A1 | 15-02-2012 | CA | 2758078 | A1 | 14-10-2010 |
| | | | CN | 102388224 | A | 21-03-2012 |
| | | | EP | 2417359 | A1 | 15-02-2012 |
| | | | ES | 2559932 | T3 | 16-02-2016 |
| | | | FR | 2944060 | A1 | 08-10-2010 |
| | | | JP | 5497150 | B2 | 21-05-2014 |
| | | | JP | 2012522938 | A | 27-09-2012 |
| | | | KR | 20120013959 | A | 15-02-2012 |
| | | | RU | 2011144876 | A | 20-05-2013 |
| | | | US | 2012036865 | A1 | 16-02-2012 |
| | | | WO | 2010116071 | A1 | 14-10-2010 |
| GB 2469489 | A | 20-10-2010 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1809907 B1
- US 6164931 A

- US 20050169764 A1
- US 20030136001 A1